# EUROPEAN PATENT SPECIFICATION

(11) **EP 2 863 324 B1**
(45) Date of publication and mention of the grant of the patent: **09.01.2019**
(21) Application number: 14188358.7
(22) Date of filing: 09.10.2014
(51) Int. Cl.: G06F 17/30

(54) **A METHOD OF OPERATING A MOBILE TELECOMMUNICATION DEVICE IN AN ENERGY SAVING MODE**
VERFAHREN ZUM BETRIEB EINER MOBILEN TELEKOMMUNIKATIONSVORRICHTUNG IN EINEM ENERGIESPARMODUS
PROCÉDÉ DE FONCTIONNEMENT D'UN DISPOSITIF DE TÉLÉCOMMUNICATION MOBILE DANS UN MODE D'ÉCONOMIE D'ÉNERGIE

(30) Priority: 09.10.2013 US 201314049857
(43) Date of publication of application: 22.04.2015
(73) Proprietor: SAP SE, 69190 Walldorf (DE)
(72) Inventor: Fabijancic, Toni, 69190 Walldorf (DE); Herbst, Axel, 69190 Walldorf (DE); Nolte-Boemelburg, Jan, 69190 Walldorf (DE); Roeher, Mathias, 69190 Walldorf (DE)
(74) Representative: Richardt Patentanwälte PartG mbB

(56) References cited:
- US-A- 6 154 748
- US-A1- 2003 212 687
- US-A1- 2007 050 333
- US-A1- 2011 167 402
- JACINTO M H ET AL: "Bidirectional conversion between XML documents and relational data bases", COMPUTER SUPPORTED COOPERATIVE WORK IN DESIGN, 2002. THE 7TH INTERNATI ONAL CONFERENCE ON SEP 25 - 27, 2002, PISCATAWAY, NJ, USA,IEEE, 25 September 2002 (2002-09-25), pages 437-443, XP010615730, ISBN: 978-85-285-0050-9
- ROBERT D CAMERON ET AL: "High performance XML parsing using parallel bit stream technology", COLLABORATIVE RESEARCH, ACM, 2 PENN PLAZA, SUITE 701 NEW YORK NY 10121-0701 USA, 27 October 2008 (2008-10-27), pages 222-235, XP058243539, DOI: 10.1145/1463788.1463811

## Description

### BACKGROUND

Mobile devices such as smartphones, tablets, have become mainstream computing devices. It is expected that several hundreds of millions of mobile devices will be sold in the next years. The growth of mobile devices as vital tools not only for communication, but for various computing related tasks such as data storage, data analysis and the like. However, Mobile devices tend to have limited battery life and the ongoing trend in telecommunication is to provide mobile devices with enhanced performances that can support multiple applications while controlling the energy consumption in the mobile devices.

US 2007/050333 A1 discloses an archive indexing engine for archiving data from a database.

US 2011/167402 discloses an generic framework for accelerated development of automated software solutions.

Robert D. Cameron et Al, COLLABORATIVE RESEARCH, ACM, 2 Penn Plaza, Suite 701, New York, NY 10121-0701 USA, 27 October 2008, pages 222-235 discloses high performance XML parsing using parallel bit stream technology.

### SUMMARY

Various embodiments provide a method of operating a mobile telecommunication device in an energy saving mode and a mobile telecommunication device as described by the subject matter of the independent claims. Advantageous embodiments are described in the dependent claims.

In one aspect, the invention relates to a method of operating a mobile telecommunications device in an energy saving mode. The mobile telecommunications device comprises a mobile relational database. The mobile relational database comprises related tables, wherein the mobile relational database is stored in a first storage of the mobile telecommunication device, wherein the mobile telecommunication device operates in a default energy consuming mode. The method comprises:
- providing a second storage in the mobile telecommunication device;
- providing a text processing application for accessing texts encoded in a predefined character encoding scheme;
- selecting from the related tables one or more set of records, wherein records of a set of records are linked or related to each other with a database key;
- for each selected set of records combining the records of the set of records in a text object by:
   ∘ encoding or formatting the entries of said records in a concatenated alphanumeric format using the predefined character encoding scheme; and
   ∘ tagging the text object using the database key;
- storing the text objects in the second storage and deleting the one or more set of records from the related tables; and
- configuring by a control unit of the mobile telecommunications device the text processing application to access the stored text objects in the second storage to operate the mobile telecommunication device in the energy saving mode, wherein the text processing application comprises a parallel bit stream text processing application;
- receiving a query including a search term;
- searching using the parallel bit stream text processing application for the search term in the stored text objects;
- displaying portions of the text objects that include the search term in a graphical user interface of the mobile telecommunication device to prevent usage of the scrolling function of the graphical user interface.

The concatenated alphanumeric (or string) format is a machine readable format recognizable by the text processing application.

A mobile relational database is a database that stores information about both the data and how it is related. For example, data and relationships are represented in a flat, two-dimensional table that preserves relational structuring.

For example, the entries of records of a set of records may be formatted in a string format (i.e. readable format) one after the other. The tagging of the text object may be done for example by formatting the primary key as the first term or string of the text object.

For example, the entries of records of a set of records may be formatted in one or more text lines (or lines of texts).

As used herein, the term "alphanumeric format" or "string format" refers to a structure in which texts, strings or terms are organized, including the particular placement of text in a location, such as indentation, margins, justification, placement order, the line spacing etc. For example, an entry of the entries may be formatted or converted to a string format and then encoded in the text object e.g. if the entry is an integer number, the integer number may be encoded as a string in the text object such that it can be read by the parallel bit stream text processing application.

The database key may comprise the primary key or any entry of a table that is common or shared between the related tables. The records of a set of records may have a common entry that appears or belongs to each record of the set of records. For example, each of the related tables may comprise a same field of primary keys, wherein the database key may comprise a primary key.

For example, the text objects may be stored in a single table, wherein each record of the single table may comprise a text object. In another example, the text objects may be combined in fewer number of text objects e.g. in a single or two text objects.

For example, a text object may represent a single data object e.g. if records of a set of records are linked with a database key being a computer ID, then the text object that is created for that set of records may represent a given data object e.g. a computer having the computer ID.

For example, the first storage and the second storage may or may not be different from each other. The first storage and the second storage may be incorporated in the same hardware.

For example, the text object may be tagged with the database key such that it can be recognized as the text object that combines the records that are linked with a tag being the database key for example. The tagging may comprise naming the text object using the database key and/or placing in the text object an indication of the database key.

The encoding or formatting the entries of said records in a concatenated alphanumeric format is performed following the predefined character encoding scheme.

The above features may have the advantage of saving energy on the mobile telecommunication device, in that the amount of data to be accessed by the text processing application is reduced compared to conventional methods. Combining the multiple related tables in compact text objects may also reduce the search overhead and thus may save energy on the mobile telecommunication device. For example, instead of performing multiple searches on multiple tables only a single search may be performed on a single text object that combines the content of the multiple tables. This may also increase the search speed compared to a search that it is performed on multiple database tables.

According to one embodiment, the second storage is provided as an archive storage for archiving at least part of the related tables. For example, the second storage comprises a Hard Disk Drive, HDD, storage and the first storage comprises Solid State Drive, SSD, storage.

For example, the archiving of the at least part of the related tables may be performed upon determining that the access frequency to the at least part of the related tables is below a predefined minimum access frequency threshold e.g. 1 access per year.

The encoding of related records into text objects may be particularly advantageous for archiving processes, where usually access to archived data may take a long time. Indeed, the present method may save energy compared to the conventional methods that archive the whole related tables and not compact text objects as it is the case with the present method e.g. instead of reading multiple tables in order to search for terms related to a given data object, a single read of a text object that represents a data object may be performed.

According to one embodiment, the second storage is an energy efficient storage, wherein the access to a given amount of data stored in the second storage consumes less energy than an access to the same amount of data stored in the first storage. According to one embodiment, the first storage comprises a HDD storage, wherein the second storage comprises a SSD storage.

For example, the data tables that have been initially stored in HDD storage (e.g. because of their low access frequency and/or for saving storage from where they have been move e.g. a SSD storage etc.) may be reduced in size and/or volume by using the present encoding method and may thus be put into the SSD storage. For example, moving the data tables as they are to the SSD storage may not have significant improvement (e.g. on energy consumption on the mobile telecommunication device) compared to the present method that may further increase the improvement e.g. by avoiding the relational database join operations or by accessing a single table that contains the text objects and thus moving the text objects to the SSD storage may save energy on the mobile telecommunication device as required or as desired. In this way, the energy may be further saved on the mobile telecommunication device since the text objects may be accessed or read from the SSD storage instead of HDD storage.

According to one embodiment, the text processing application comprises a parallel bit stream text processing application.

The parallel bit stream text processing application may be used for text processing such as text parsing, string or term search and regular expression matching. The parallel bit stream text processing application may be based on a parallel bite stream method in which parallel streams of bits are formed such that each stream comprises bits in one-to-one correspondence with the character codes units of a source data stream e.g. the text objects. The advantage of the parallel bit stream representation may be that it may process multiple byte positions e.g. 128 at a time using bitwise logical, shift and arithmetic operations.

In contrast to conventional text processing tools that are built around a byte-at-a-time sequential processing model, the parallel bit stream text processing application may be an energy efficient method for reading or parsing the text objects, in particular when the text objects are stored in a compact format and in an energy efficient storage.

For example, the parallel bit stream text processing application may scan one or more text objects at once e.g. by forming parallel streams of bits from the one or more text objects.

In another example, the text processing application may use a byte-at-a-time sequential processing model.

The mobile telecommunication device may comprise a smartphone, a PDA, a laptop, a personal computer, or a notebook computer etc.

According to one example, the predefined character encoding scheme comprises data compression. The method further comprises receiving from a second telecommunication device a query including a search term, wherein the second telecommunication device is connected to the telecommunication device via a network; searching using the parallel bit stream text processing application for the search term in the stored compressed text objects; sending the compressed text objects that include the search term to the second telecommunication device.

This embodiment may further reduce the energy consumption on the mobile telecommunication device by saving at least the communication energy due to reduced size of the compressed text objects. This is particularly advantageous when multiple queries are received by the mobile telecommunication device.

According to one embodiment, the network comprises an access network of a telecommunication system, wherein the sending of the compressed text objects that include the search term is performed in one or more SMS or in one or more emails.

This embodiment may be advantageous as it may be seamlessly integrated with the existing mobile telecommunication devices. This embodiment may further save energy on the mobile telecommunication device, required to setup a new communication link e.g. using a new protocol between the two mobile telecommunication devices.

The scrolling on graphical user interfaces increases the energy consumption in the mobile telecommunication devices. Thus, the present method may have the advantage of further saving energy on the mobile telecommunication device since the scrolling function is prevented or less used.

For example, other displaying functions (e.g. such as color function etc.) of the graphical user interface and/or the display device on which the graphical user interface is displayed may be controlled to save energy on the mobile telecommunication device. For example, using less power consuming colors in the graphical user interface; and lowering brightness level of the display of the mobile telecommunication device.

According to one embodiment, a text object of the text objects comprises at least one of: a text file; an XML file; a SMS; an email.

According to one embodiment, the predefined character encoding scheme comprises data encryption and/or a text pattern. The text pattern may be for example a single line of one or more text strings. That is, the entries of the related records are encoded (one following the other) in the single text line.

According to one embodiment, the mobile telecommunication device is a battery powered device. The present method may be particularly advantageous for battery powered devices as they are more vulnerable to the high energy consumption compared to other powered devices.

According to one embodiment, the method further comprises generating a search index of the text objects based on terms in the text objects, wherein the text search in the text objects uses the search index to search for terms in the text objects.

This embodiment may reduce the search time as it is based on indexes and may thus have the advantage of further saving the energy on the mobile telecommunication device.

According to one embodiment, the encoding of the entries is performed using alphanumeric characters supported by the mobile telecommunication device.

In another aspect, the invention relates to a computer program product comprising computer executable instructions that when executed on a computer performs the method steps of the method of any one of the preceding claims.

In another aspect, the invention relates to mobile telecommunication device comprising a mobile relational database. The mobile relational database comprises related tables. The mobile relational database is stored in a first storage of the mobile telecommunication device. The mobile telecommunication device further comprises a second storage; and a text processing application for accessing texts encoded in a predefined character encoding scheme. The mobile telecommunication device is configured for:
- selecting from the related tables one or more set of records, wherein records of a set of records are linked with a database key;
- for each selected set of records combining the records of the set in a text object by:
   ∘ encoding the entries of said records in a concatenated alphanumerical format using the predefined character encoding scheme; and
   ∘ tagging the text object using the database key;
- storing the text objects in the second storage and deleting the one or more set of records from the related tables; and
- configuring the parallel bit stream text processing application to access the stored text objects in the second storage to operate the mobile telecommunication device in the energy saving mode, wherein the text processing application comprises a parallel bit stream text processing application;
- receiving a query including a search term;
- searching using the parallel bit stream text processing application for the search term in the stored compressed text objects;
- displaying portions of the text objects that include the search term in a graphical user interface of the mobile telecommunication device to prevent usage of the scrolling function of the graphical user interface.

In one example, a method determines data stored in a plurality of tables in a first database for archiving. The data is combined from the plurality of tables into a set of objects in a readable format where an object in the set of objects includes terms from the plurality of tables associated with the object. The method then stores the set of objects in the text format in a second database where a search query processor is able to search terms in the set of objects in the readable format. Then, the data stored in the plurality of tables in the first database is deleted in response to the archiving.

In one example, a non-transitory computer-readable storage medium contains instructions, that when executed, control a computer system to be configured for: determining data stored in a plurality of tables in a first database for archiving; combining data from the plurality of tables into a set of objects in a readable format, wherein an object in the set of objects includes terms from the plurality of tables associated with the object; storing the set of objects in the text format in a second database, wherein a search query processor is able to search terms in the set of objects in the readable format; and deleting the data stored in the plurality of tables in the first database for archiving.

In one example, an apparatus includes: one or more computer processors; and a non-transitory computer-readable storage medium comprising instructions, that when executed, control the one or more computer processors to be configured for: determining, by a computer system, data stored in a plurality of tables in a first database for archiving, wherein the data stored in the plurality of tables is in a relational data model format; combining, by the computer system, data from the plurality of tables into a set of objects in a readable format, wherein an object in the set of objects includes terms from the plurality of tables associated with the object; storing, by the computer system, the set of objects in the text format in a second database in the readable format, wherein a search query processor is able to search terms in the set of objects in the readable format, wherein the data stored in the second database is compressed in the second database; and deleting, by the computer system, the data stored in the plurality of tables in the first database for archiving.

The following detailed description and accompanying drawings provide a better understanding of the nature and advantages of particular embodiments.

### BRIEF DESCRIPTION OF THE DRAWINGS

FIG. 1 depicts a system for archiving data according to one embodiment.
FIG. 2 depicts a more detailed example of the archive process according to one embodiment.
FIG. 3A shows an example of tables that may be stored in a relational database according to one embodiment.
FIG. 3B shows an example of archived objects in a LOB table according to one embodiment.
FIG. 4 depicts a simplified flowchart of a method for processing a search query according to one embodiment.
FIG. 5A shows a first example of a search result according to one embodiment.
FIG. 5B shows a second example of a search result according to one embodiment.
FIG. 6 depicts a more detailed example of an archive manager according to one embodiment.
Fig. 7 illustrates hardware of a special purpose computing machine configured with the archive system according to one embodiment
Fig. 8 schematically depicts a mobile telecommunication device according to the present disclosure.

### DETAILED DESCRIPTION

In the following description, for purposes of explanation, numerous examples and specific details are set forth in order to provide a thorough understanding of particular embodiments. Particular embodiments as defined by the claims may include some or all of the features in these examples alone or in combination with other features described below, and may further include modifications and equivalents of the features and concepts described herein.

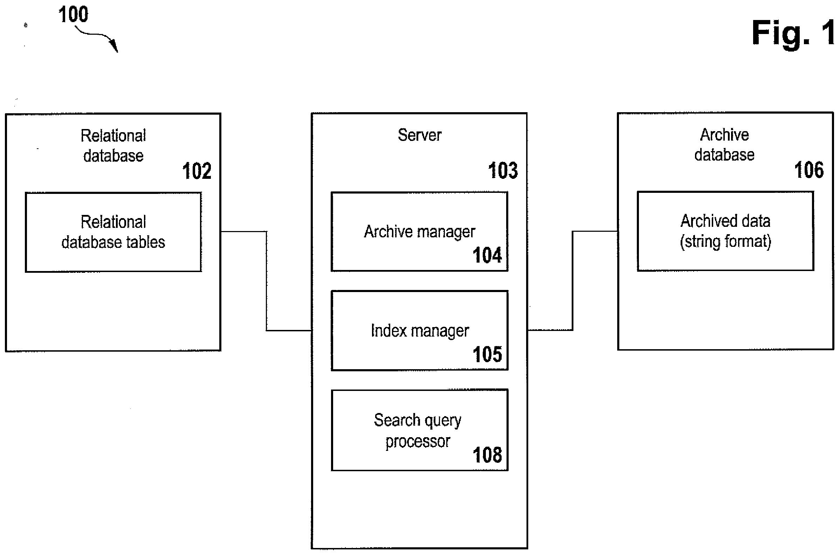

FIG. 1 depicts a system 100 for archiving data according to one embodiment. System 100 includes a relational database 102, an archive manager 104, a search query processor 108, and an archive database 106. Although single entities of relational database 102, archive manager 104, search query processor 108, and archive database 106 are shown, it will be understood that different numbers of each entity may be appreciated.

Relational database 102 may store data in a relational format. For example, relational database 102 includes tables of data items that are formally described and organized according to a relational model. In the relational model, rows in one table may be related to other rows in other tables. The related rows are linked via keys. To retrieve data in the related rows, a user submits a query using a "join" command. A person of skill in the art will appreciate how to implement a relational database. Also, although a relational format is described, other database formats may be used.

Server 103 includes archive manager 104 and search query processor 108. Archive manager 104 coordinates the archive process. Also, search query processor 108 processes search queries for data stored in archive database 106. Although archive manager 104 and search query processor 108 are shown as being in the same server, archive manager 104 and search query processor 108 may be found in different devices.

Archive database 106 stores data that archive manager 104 has archived from relational database 102. In archiving, the data that is archived to archive database 106 is deleted from relational database 102. This creates additional space in relational database 102.

Archive database 106 may store the archived data from relational database 102 in a different format than the data stored in relational database 102. In one embodiment, archive database 106 stores the archived data in an object-based format. For example, relational database 102 stores data for an object in different tables that are linked together. Archive manager 104 may retrieve data from tables in relational database 102 and create an object using the data. In one embodiment, archive manager 104 creates a data object, which summarizes a data transaction for a user. Archive manager 104 then stores the object in a "readable" format, such as a string or text format. A readable format may be a format that can be read by search query processor 108. Having the archived data in a readable format allows search query processor 108 to perform a text search on the archived data. Due to the data being stored in archive database 106 in a readable format, a user does not need to create pre-determined indexes that are used to index the data. However, an index manager 105 may create a functional index 214 that provides a search index. Index manager 105 may create the search index without having columns specified. Rather, index manager 105 may index terms in the strings. This provides the flexibility of searching inside everything in an object. For example, a user may search for any term in the data object. This is different from searching through a pre-determined index where a user can only search for terms in the pre-determined index. Further, the text search may be different from searching in the relational database model where a user uses joins to retrieve data from tables that are linked together. Using particular embodiments, archive database 106 can return an object without using a join.

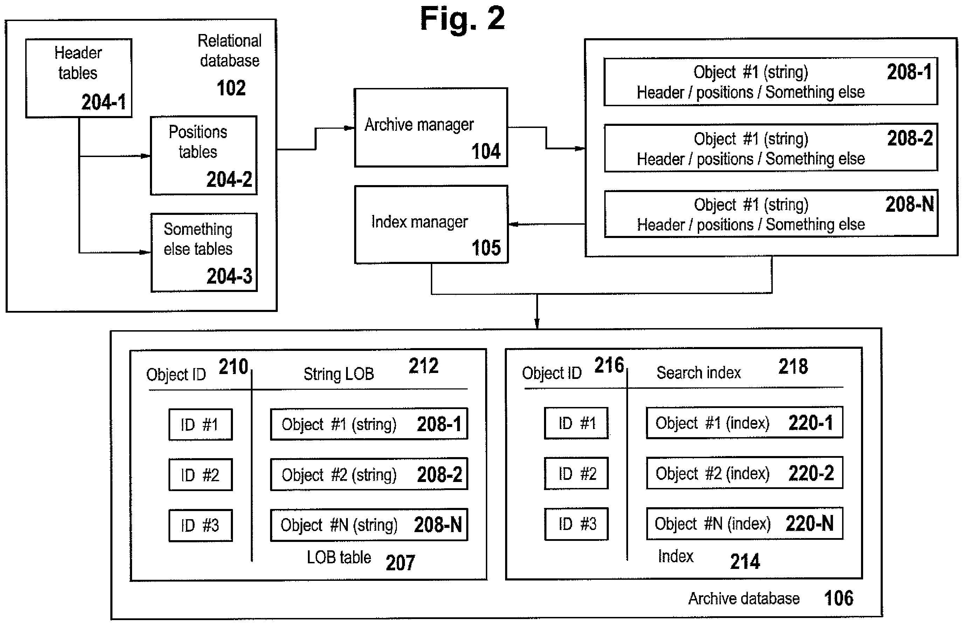

FIG. 2 depicts a more detailed example of the archive process according to one embodiment. As mentioned above, relational database 102 stores objects in a relational database table format in different tables. For example, objects are stored in various tables 204-1, 204-2, and 204-3. In one example, a headers table 204-1 includes headers for the objects, a positions table 204-2 is linked to headers table 204-1 and includes positions for the headers, and something-else table 204-3 may include other additional information and is linked to headers table 204-1. To retrieve data from relational database 102, a user would have to use a "join" command to join information from headers table 204-1, positions table 204-2, and something-else table 204-3 together to form the object. For example, archive manager 104 extracts the data for the objects using joins and converts the data from the relational data model to an object model. In this way, archive manager 104 creates the objects in a readable format, such as in a string. For example, various objects are shown as objects #1, #2, ... #n at 208-1, 208-2, ... 208-n.

After converting the data in the relational data model to the object model and creating a string for each object, archive manager 104 stores the objects in archive database 106. In one embodiment, archive manager 104 stores the objects in a large object (LOB) table 207. A LOB table stores the object as a single entry in the LOB table and is identified by an object identifier. Although archive manager 104 may store each object as an entry in the LOB table, archive manager 104 may store the object in multiple entries. In one example, a column 210 includes identifiers for the objects that are stored in the LOB table. For each identifier, table 207 stores a corresponding object in a string LOB column 212. For example, the objects shown at 208-1, 208-2, and 208-n are stored in entries in column 212.

In addition to creating a LOB table 207, index manager 105 may create a functional index 214 that provides a search index. For example, functional index 214 may be a table or any other structure that includes a search index for each object in a column 216. In one example, for each entry in the column 216, a search index for each respective object is stored in a column 218. The search index may be an index of the terms in the string of the object. The difference between the search index stored in functional index 218 and the string stored in LOB table 207 is that the search index has been run through a general text processing algorithm to create the search index. Also, pre-defining terms for the search index is not necessary. Rather, the index is automatically created based on the content of the objects. This may index each term of the string stored in column 212 of LOB table 207. For example, corresponding search indexes 220-1, 220-2, ... 220-N correspond to respective objects 208-1, 208-2, ... 208-N.

After creating tables 207 and 214, archive database 106 may compress these tables. The compression performed may not compromise the ability to perform searches on the objects. For example, searches on the archived data may still be performed using the search index stored in functional index table 214 after compression. Compared to the process described in the Background, particular embodiments store the objects in a readable format in archive database 106 initially. In the Background, compressed files were stored in the archive database initially. In particular embodiments, archive database 106 performs the compression on the archived data once the data is stored in archive database 106. Archive database 106 may use underlying database algorithms to perform compression that still allow searching of the objects.

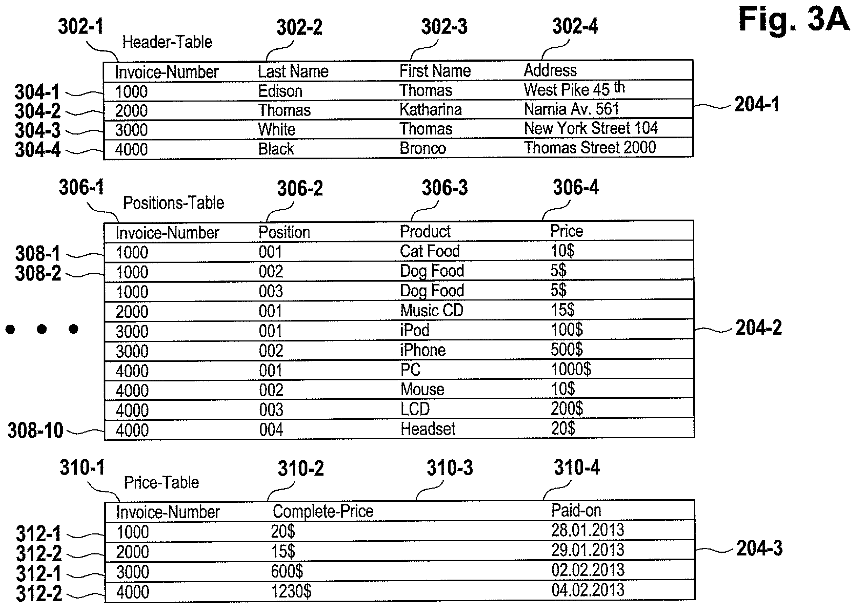

FIG. 3A shows an example of tables that may be stored in relational database 102 according to one embodiment. A header table 204-1 includes information for various invoices 1000, 2000, 3000, and 4000. For example, rows 304-1, 304-2, 304-3, and 304-4 list data for invoices 1000, 2000, 3000, and 4000, respectively. Also, columns 302-1, 302-2, 302-3, and 302-4 list data for an invoice number, a last name, a first name, and an address, respectively. For example, for invoice #1000, the last name associated with this invoice is Edison, the first name is Thomas, and the address is West Pike 45^{th}.

Positions table 204-2 includes columns 306-1, 306-2, 306-3, and 306-4 for the invoice #, position, product, and price, respectively. Also, rows 308-1, 308-2, ..., 308-10 list various entries for the invoices. For example, in row 308-1, for invoice 1000, the position is 001 and the invoice is for cat food for a price of $10.00. For row 308-2, for invoice 1000, this is position 002, and the invoice is for dog food that was $5.00. The positions, products, and prices for various other invoices are also listed in positions table 204-2.

A price table 204-3 includes additional information in a something-else table. Price table 204-3 includes columns 310-1, 310-2, and 310-3 for invoice number, complete price, and a paid-on date. Rows 312-1 - 312-4 summarize the complete prices for invoices. For example, in row 312-1, invoice 1000 has a complete price of $20.00 that was paid on January 28, 2013. The complete price of $20.00 adds up the prices for invoices 1000 found in positions table 204-1 in rows 308-1, 308-2, and 308-3 (e.g., $10.00 + $5.00 + $5.00 = $20.00).

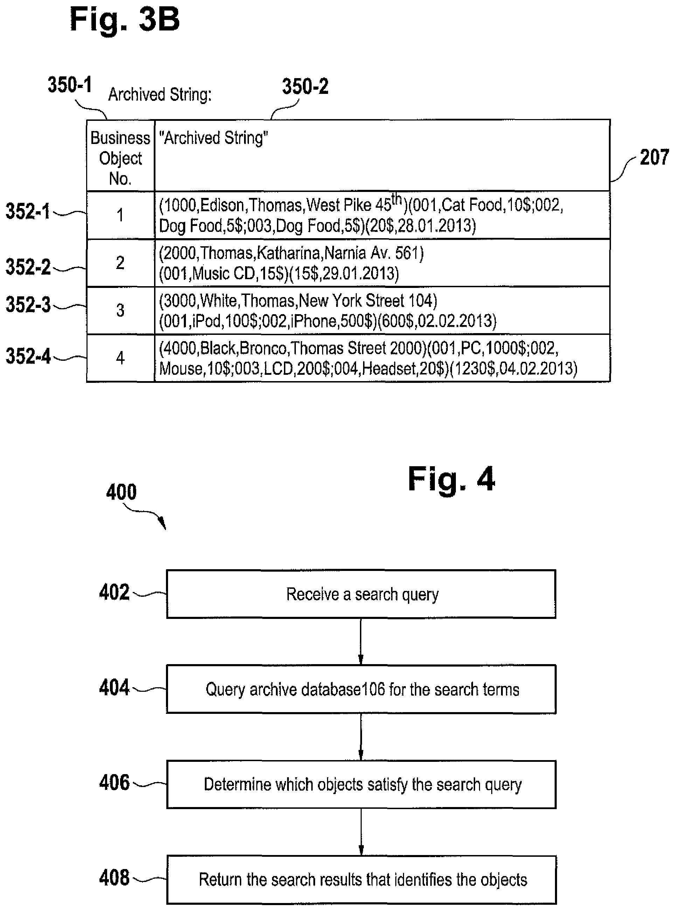

Archive manager 104 may create objects from the tables summarized in FIG. 3A. For example, FIG. 3B shows an example of archived objects in LOB table 207 according to one embodiment. A column 350-1 identifies the objects and a column 350-2 includes entries for the objects in a string format. For example, rows 352-1 - 352-4 summarize strings that are created from header table 204-1, positions table 306-1, and price table 204-3. In row 352-1, object #1 is associated with a string that includes entries from rows 304-1, 308-1, 308-2, 308-3, and 312-1. For example, the terms (1000,Edison,Thomas,West Pike 45th) are from table 204-1, the terms (001,Cat Food,10$;002,Dog Food,5$;003,Dog Food,5$) are from table 204-2, the terms (20$,28.01.2013) are from table 204-3. In other words, the rows in different tables that include information for invoice 1000 are summarized in a string in row 352-1. Also, row 352-2 summarizes the entries for invoice 2000 in tables 204-1 - 204-3. Similarly, rows 352-3 and 352-4 summarize invoices 3000 and 4000, respectively.

Once archive manager 104 stores archived data in archive database 106, users can perform searches for the data. FIG. 4 depicts a simplified flowchart 400 of a method for processing a search query according to one embodiment. At 402, search query processor 108 receives a search query. The search query may include a number of search terms, which may be textual terms. For example, the terms may be "Thomas" or "2000". At 404, search query processor 108 queries archive database 106 for the search terms. For example, search query processor 108 uses the search index to determine which objects include the search terms.

At 406, search query processor 108 determines which objects satisfy the search query. An object may satisfy the search query if the object includes the same search term (or a synonymous term). For example, an object may include the term Thomas. At 408, search query processor 108 returns the search results that identifies the objects. For example, the search result may include the strings stored in LOB table 207 for the respective objects. In one example, if object #1 and object #2 are included in the search result, then the entire strings shown at 208-1 and 208-2 are returned in a search result. Because strings are created, search query processor 108 may only return the entire string.

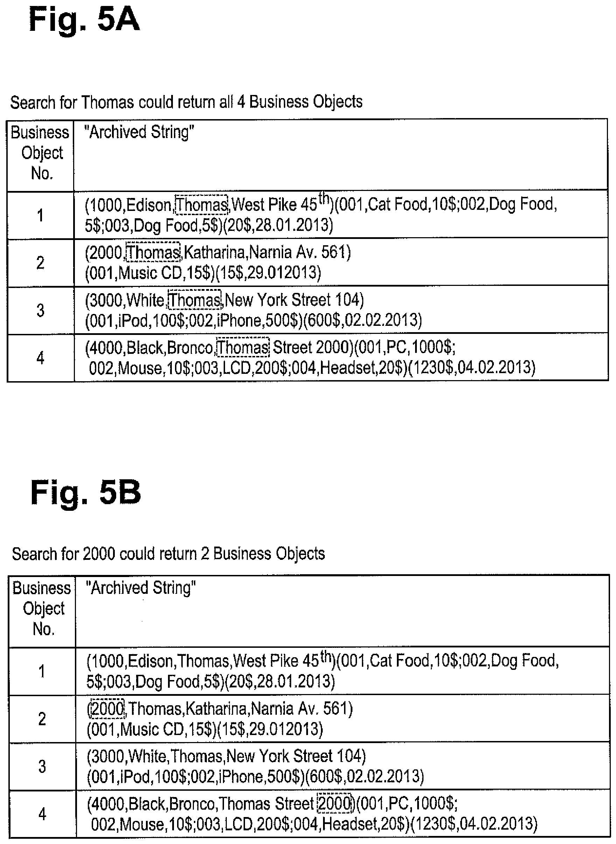

FIG. 5A shows a first example of a search result and FIG. 5B shows a second example of a search result according to one embodiment. In FIG. 5A, the search includes the term "Thomas". In this case, the term "Thomas" is included in objects #1, #2, #3, and #4, and the search result returns all four objects #1 - #4.

It is noted that in the text search, the original table in which the term resided in relational database 202 does not affect the search results because archive manager 104 has converted the data in the relational database to a string format. For example, if a search for the term "Thomas" as a first name in a header table 204-1 shown in FIG. 3A, then objects #1 and #3 may be returned because these objects have "Thomas" as the first name. Objects #2 and #4 have the term "Thomas" as the last name and the address, respectively. Thus, a search with "Thomas" as the first name in relational database 102 would not return objects #2 and #4. However, in this case where the information for the objects has been joined and archived as a string, if the string includes the term "Thomas", search query processor 108 returns any object that includes the term (e.g., objects #1, #2, #3, and #4 in this case). In other embodiments, a user may subsequently filter search results. For example, a user may specify a search is for Thomas as a first name. In this case, search query processor 108 determines only objects #1 and #3 because these objects have Thomas as the first name. Search query 108 may determine which objects include Thomas as the first name based on the structure of the string (e.g., last name, first name), or by other methods, such as the terms in the string may be labeled as last name or first name. These labels may be stored as part of the strings (and being marked/escaped to be recognized as such) or may be persisted separately in a convenient metadata structure (that determines which part of the string represents a value of which search attribute that is used for subsequent filtering).

In FIG. 5B, a search for "2000" may return objects #2 and #4. In this case, objects #2 and #4 include the term 2000 while objects #1 and #3 do not. As noted above, the search term 2000 is included in different columns and/or tables in relational database 102. For example, for object #2, 2000 is the invoice number found in header table 204-1. For object #4, 2000 is found in column 302-4 in the address for invoice 4000. As discussed above, because the string includes the search term 2000 for both objects #2 and #4, search query processor 108 returns a search result including objects #2 and #4.

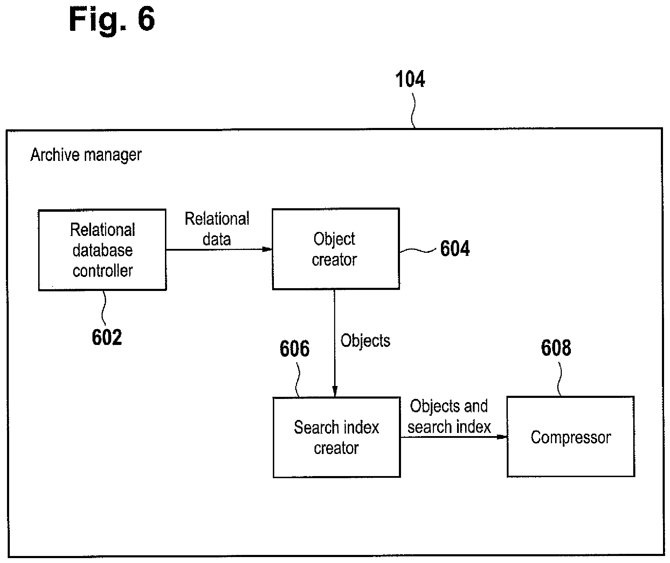

FIG. 6 depicts a more detailed example of archive manager 104 according to one embodiment. A relational database controller 602 is configured to query relational database 102 for data for objects. For example, relational database controller 602 may send joins for tables to create objects that have data stored in various tables that are linked together.

Once the data is extracted from relational database 102, an object creator 604 creates objects for the data. For example, object creator 604 may create strings for each object that include the data for each respective object.

Once the strings are created, a search index creator 606 may index the strings. For example, a database search engine may process the strings and index the terms of the strings. In this case, manual indexes for terms do not need to be created. Once the strings and search index are created, a storage manager 608 stores the strings and search index in archive database 106. A compressor 608 then compresses the strings and search index. For example, compressor 608 compresses the LOB table 207 and functional index 214.

Accordingly, archive manager 104 stores archived data in a readable string format that can be indexed by a database search engine. Archive manager 104 does not need to create manual indexes on fields and each search searches each field of the archived data.

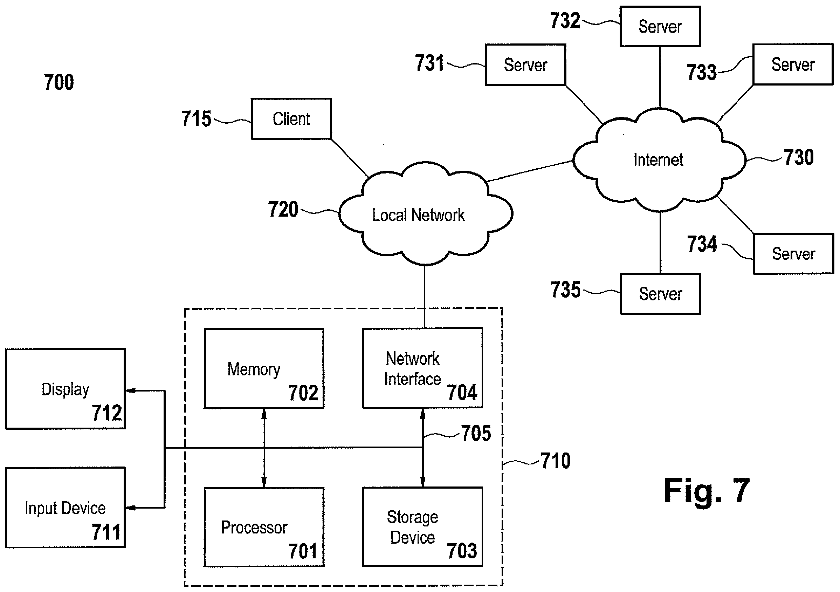

Fig. 7 illustrates hardware of a special purpose computing machine configured with the archive system according to one embodiment. An example computer system 710 is illustrated in Fig. 7. Computer system 710 includes a bus 705 or other communication mechanism for communicating information, and a processor 701 coupled with bus 705 for processing information. Computer system 710 also includes a memory 702 coupled to bus 705 for storing information and instructions to be executed by processor 701, including information and instructions for performing the techniques described above, for example. This memory may also be used for storing variables or other intermediate information during execution of instructions to be executed by processor 701. Possible implementations of this memory may be, but are not limited to, random access memory (RAM), read only memory (ROM), or both. A storage device 703 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 703 may include source code, binary code, or software files for performing the techniques above, for example. Storage device and memory are both examples of computer readable storage mediums.

Computer system 710 may be coupled via bus 705 to a display 712, such as a cathode ray tube (CRT) or liquid crystal display (LCD), for displaying information to a computer user. An input device 711 such as a keyboard and/or mouse is coupled to bus 705 for communicating information and command selections from the user to processor 701. The combination of these components allows the user to communicate with the system. In some systems, bus 705 may be divided into multiple specialized buses.

Computer system 710 also includes a network interface 704 coupled with bus 705. Network interface 704 may provide two-way data communication between computer system 710 and the local network 720. The network interface 704 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 704 sends and receives electrical, electromagnetic, or optical signals that carry digital data streams representing various types of information.

Computer system 710 can send and receive information through the network interface 704 across a local network 720, an Intranet, or the Internet 730. In the Internet example, software components or services may reside on multiple different computer systems 710 or servers 731-735 across the network. The processes described above may be implemented on one or more servers, for example. A server 731 may transmit actions or messages from one component, through Internet 730, local network 720, and network interface 704 to a component on computer system 710. The software components and processes described above may be implemented on any computer system and send and/or receive information across a network, for example.

Particular embodiments may be implemented in a non-transitory computer-readable storage medium for use by or in connection with the instruction execution system, apparatus, system, or machine. The computer-readable storage medium contains instructions for controlling a computer system to perform a method described by particular embodiments. The computer system may include one or more computing devices. The instructions, when executed by one or more computer processors, may be operable to perform that which is described in particular embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. The above examples and embodiments should not be deemed to be the only embodiments, and are presented to illustrate the flexibility and advantages of particular embodiments as defined by the following claims. Based on the above disclosure and the following claims, other arrangements, embodiments, implementations and equivalents may be employed without departing from the scope hereof as defined by the claims.

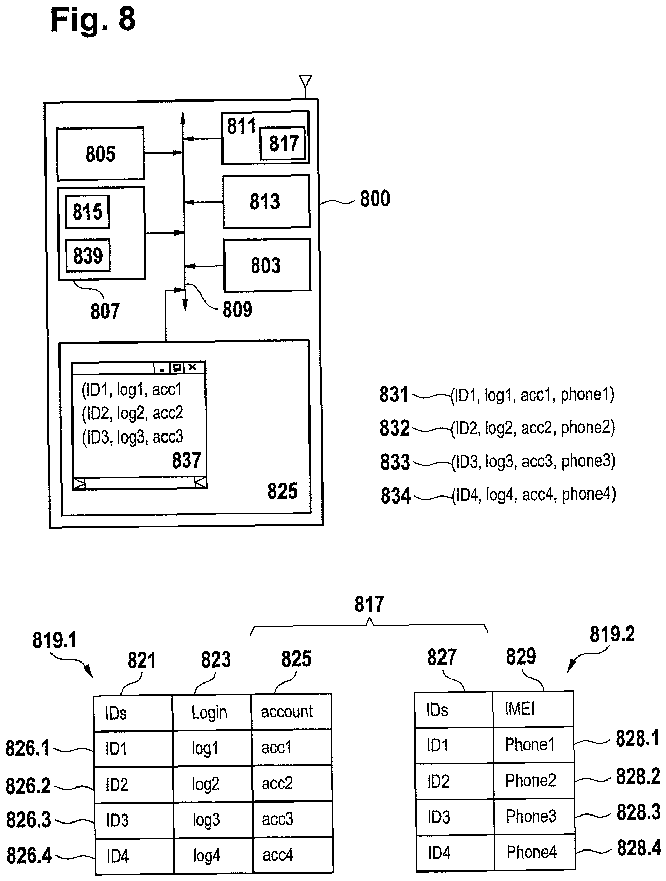

Fig. 8 shows an exemplary mobile telecommunication device 800. The mobile telecommunication device 800 may comprise a processor 803, a transceiver 805, a memory 807 (e.g. a main memory) each capable of communicating with one or more components of the mobile telecommunication device 800. For example, all components are coupled to a bidirectional system bus 809.

The processor 803 may be a microprocessor, a single core processor, a multicore processor or the like. The processor 803 may control the operation of the mobile telecommunication device 800. The transceiver 805 may be implemented as a transmitting and receiving component of the mobile telecommunication device 800.The mobile telecommunication device 800 may further comprise a display device 825 which displays characters and images and the like. For example, the display device 825 may be a touch sensitive display screen.

For example, the mobile telecommunication device 800 may be powered by a battery or a solar power supply device including a solar panel and a rechargeable battery. In another example, the mobile telecommunication device 800 may be powered by any other power source.

The mobile telecommunication device 800 may further comprise a first storage 811 and a second storage 813.

For example, the second storage 813 may be used for archiving data of the mobile telecommunication device 800.

In another example, the second storage 813 may be an energy efficient storage in that, the access to a given amount of data stored in the second storage 813 consumes less energy than an access to the same amount of data stored in the first storage 811, e.g. the first storage may be a HDD storage and the second storage 813 may comprise a SSD storage. In this case, the present method may further save energy in the mobile telecommunication device 800 when the text objects (see below) are also stored and accessed in the energy efficient storage.

The first storage may comprise a relational database 817. The relational database 817 comprises related tables such as tables 204-1, 204-2 and 204-3 of Fig. 3A.

For simplicity of the description the related tables 817 are shown as containing two tables 819.1 and 819.2. Table 819.1 comprises three columns. The first column 821 comprises user IDs, ID1-ID4 e.g. user IDs of other mobile telecommunication devices that have at least one communication with the mobile telecommunication device 800. Second column 823 comprises login information associated with the user IDs and third column 825 comprises user account numbers associated with the user IDs. Table 819.1 comprises multiple records 826.1-826.4 each associated or identified by a user ID.

Table 819.2 comprises two columns. Column 827 comprises the user IDs. Column 829 comprises international mobile equipment identity (IMEI) associated with the users IDs. Table 819.2 comprises multiple records 828.1-828.4 each associated with a user ID. The user IDs, ID1-ID4, may be primary keys that relate the tables 819.1 and 819.2.

Memory 807 is configured to store a plurality of mobile applications that are executable on the processor 803. For example, memory 807 may comprise a text processing application 815 (such as search query processor 108 described above) for accessing texts, terms or strings encoded in a predefined character encoding scheme. The text processing application 815 may comprise for example a parallel bit stream or a sequential byte a time text processing application. The predefined character scheme may comprise data compression, data encryprtion. The predefined character encoding scheme may further indicate the format in which a text object may be formatted or encoded e.g. in a concatenated alphanumeric or string format.

Memory 807 may further comprise a control unit 839. The related tables 819.1-2 may comprise data that is not frequently used but may still be used required. In this case, the control unit 839 may receive a request to archive the related tables 819.1-2. In another example, the archive may be performed automatically as soon as the determined frequency access to a the tables 819.1-2 becomes smaller than a predefined minimum access frequency e.g. once per year.

For that, the control unit 839 may be configured to select from the related tables 819.1-819.2 one or more set of records. For example, records 824.1 and 828.1 may form a set of records since they share the same primary key "ID1". Also, 824.2 and 828.2, 824.3 and 828.3, 824.4 and 828.4 may respectively form a respective set of records as they share the same primary key "ID2", "ID3" and "ID4" respectively.

For each set of records of some or all set of records the control unit 839 may be configured to combine the records of the set of records in a text object. For example, the records 824.1 and 828.1 may be combined in one or more text objects 831. The records 824.2 and 828.2 may be combined in one or more text objects 832. The records 824.3 and 828.3 may be combined in one or more text objects 833. The records 824.4 and 828.4 may be combined in one or more text objects 834.

The combination of the records of a set of records may be performed by encoding the entries of said records in a concatenated alphanumerical format using the predefined character encoding scheme and tagging the text object using the shared primary key. For example for the set of records comprising records 824.1 and 824.2, the entries ID1, log1, acc1, and phone1 may be formatted or written one after the other (e.g. separated by spaces or commas etc.) from the left to the right in a string format to form, for example, a line of texts. This may result in text object 831. The text object 831 may be tagged for example by formatting or encoding the primary key ID1 as the first term (from the left) of the text object 831. In another example, the text object 831 may be tagged by naming the text object 831 using the primary key e.g. text object 831 may be named "ID1".

The control unit 839 may further be configured to store the text objects 831-834 in the second storage 813 and to delete the one or more set of records from the related tables 819.1-819.2. In this example, the whole tables 819.1-819.2 may be deleted as they contain only related records. In another example, the tables 819.1-819-2 may contain other records that are unrelated to any other record.

The text objects are formatted and stored in a machine readable format, such as a string or text format. A readable format may be a format that can be read by the text processing application 815. Having the text objects in a readable format allows for example the text processing application 815 to perform a text search on the stored text objects.

As soon as the text objects 831-834 are stored in the second storage 813, the control 839 unit may configure the text processing application 815 to access or process the stored text objects 831-834 in the second storage 813. In contrast to the sequential text processing application that would for example process a text object e.g. 831 sequentially, as a single byte-at-a-time, from the first "(" to the last character ")" in the text object 831, the parallel bit stream text processing application 115 may perform a parallel scanning of streams of bits formed from the text object 831.

For example, the control unit 839 may receive a query including a search term e.g. "log"; and may thus search using the text processing application 815 for the search term in the stored compressed text objects 831-834 e.g. by parsing or scanning the text objects (e.g. from left to the right) for identifying the term "log" or by applying extended regular expression matching to the content of the text objects to find all occurrences of the term "log" in the text objects.. In this example, all the text objects 831-834 contain "log" term. In this case, the text objects 831-834 may be displayed on user interface 837 on the display 825. However, as shown in Fig. 8 only portions of the text objects 831-834 that include the search term "log" are shown (e.g. the terms "phonei" are cut). This is in order to prevent usage of the scrolling function of the graphical user interface 837, otherwise the usage of the scrolling function may consume extra energy on the mobile telecommunication device 800.

In case the query is received from another mobile telecommunication device that is connected to the mobile telecommunication device 800 e.g. via an access network such E-UTRAN, the text objects 831-834 that include the search term "log" may be returned in an SMS or an email to the other mobile telecommunication device.

## Claims

1. A method of operating a mobile telecommunications device (800) in an energy saving mode, the mobile telecommunications device comprising a mobile relational database, the mobile relational database (817) comprising related tables (819), wherein the mobile relational database (817) is stored in a first storage (811) of the mobile telecommunication device (800), wherein the mobile telecommunication device operates in a default energy consuming mode, the method comprising:
- providing a second storage (813) in the mobile telecommunication device;
- providing a text processing application (815) for accessing texts encoded in a predefined character encoding scheme;
- selecting from the related tables (819) one or more set of records, wherein records of a set of records are linked with a database key;
- for each selected set of records combining the records of the set of records in a text object (831-834) by:
∘ encoding the entries of said records in a concatenated alphanumeric format using the predefined character encoding scheme; and
∘ tagging the text object (831-834) using the database key;
- storing the text objects (831-834) in the second storage (813) and deleting the one or more set of records from the related tables (819); and
- configuring by a control unit (839) of the mobile telecommunications device (800) the text processing application (815) to access the stored text objects (831-834) in the second storage (813) to operate the mobile telecommunication device (800) in the energy saving mode, wherein the text processing application comprises a parallel bit stream text processing application;
- receiving a query including a search term;
- searching using the parallel bit stream text processing application for the search term in the stored text objects;
- displaying portions of the text objects that include the search term in a graphical user interface of the mobile telecommunication device to prevent usage of the scrolling function of the graphical user interface.

2. The method of claim 1, wherein the second storage is provided as an archive storage for archiving the related tables.

3. The method of claim 1, wherein the second storage is an energy efficient storage, wherein the access to a given amount of data stored in the second storage consumes less energy than an access to the same amount of data stored in the first storage.

4. The method of claim 3, wherein the first storage comprises a HDD storage, wherein the second storage comprises a SSD storage.

5. The method of any of the preceding claims, wherein the predefined character encoding scheme comprises data compression, the method further comprising
- receiving from a second telecommunication device a query including a search term, wherein the second telecommunication device is connected to the telecommunication device via a network;
- searching using the parallel bit stream text processing application for the search term in the stored compressed text objects;
- sending the compressed text objects that include the search term to the second telecommunication device.

6. The method of claim 5, wherein the network comprises an access network of a telecommunication system, wherein the sending of the compressed text objects that include the search term is performed in one or more SMS or in one or more emails.

7. The method of any of the preceding claims, wherein a text object of the text objects comprises at least one of:
- a text file;
- a XML file;
- a SMS;
- an email.

8. The method of any of the preceding claims, wherein the predefined character encoding scheme comprises data encryption and/or a text pattern.

9. The method of any of the preceding claims, wherein the mobile telecommunication device is a battery powered device.

10. The method of any of the preceding claims, further comprising: generating a search index of the text objects based on terms in the text objects, wherein the text search in the text objects uses the search index to search for terms in the text objects.

11. A computer program product comprising computer executable instructions that when executed on a computer performs the method steps of the method of any one of the preceding claims.

12. A mobile telecommunication device comprising a mobile relational database, the mobile relational database comprising related tables, the mobile relational database being stored in a first storage of the mobile telecommunication device, the mobile telecommunication device further comprising a second storage,; and a text processing application for accessing texts encoded in a predefined character encoding scheme, the mobile telecommunication device being configured for:
- selecting from the related tables one or more set of records, wherein records of a set of records are linked with a database key;
- for each selected set of records combining the records of the set in a text object by:
∘ encoding the entries of said records in a concatenated alphanumerical format using the predefined character encoding scheme; and
∘ tagging the text object using the database key;
- storing the text objects in the second storage and deleting the one or more set of records from the related tables; and
- configuring the parallel bit stream text processing application to access the stored text objects in the second storage to operate the mobile telecommunication device in the energy saving mode, wherein the text processing application comprises a parallel bit stream text processing application;
- receiving a query including a search term;
- searching using the parallel bit stream text processing application for the search term in the stored compressed text objects;
- displaying portions of the text objects that include the search term in a graphical user interface of the mobile telecommunication device to prevent usage of the scrolling function of the graphical user interface.

## Patentansprüche

1. Verfahren zum Betreiben einer Mobiltelekommunikationsvorrichtung (800) in einem Energiesparmodus, wobei die Mobiltelekommunikationsvorrichtung eine relationale Mobil-Datenbank (817) aufweist, wobei die relationale Mobil-Datenbank (817) zugeordnete Tabellen (819) aufweist, wobei die relationale Mobil-Datenbank (817) in einem ersten Speicher (811) der Mobiltelekommuniksationsvorrichtung (800) gespeichert wird, wobei die Mobiltelekommunikationsvorrichtung in einem Standard-Energieverbrauchsmodus betrieben wird, wobei das Verfahren Folgendes aufweist:
- Bereitstellen eines zweiten Speichers (813) in der Mobilkommunikationsvorrichtung;
- Bereitstellen einer Textverarbeitungsanwendung (815) zum Zugreifen auf Texte, die in einem vordefinierten Zeichencodierschema codiert sind;
- Auswählen von einer oder mehr Datensatzmengen aus den zugeordneten Tabellen (819), wobei Datensätze einer Datensatzmenge mit einem Datenbankschlüssel verbunden sind;
- für jede ausgewählte Datensatzmenge Kombinieren der Datensätze der Datensatzmengen in einem Textobjekt (831 - 834) durch:
∘ Codieren der Einträge der genannten Datensätze in einem verknüpften alphanumerischen Format unter Verwendung des vordefinierten Zeichencodierschemas; und
∘ Markieren des Textobjekts (831 - 834) unter Verwendung des Datenbankschlüssels;
- Speichern der Textobjekt (831 - 834) im zweiten Speicher (813) und Löschen der einen oder der mehr Datensatzmengen aus den zugeordneten Tabellen (819) und
- durch eine Steuereinheit (839) der Mobiltelekommunikationsvorrichtung (800) Konfigurieren der Textverarbeitungsanwendung (815), um auf die gespeicherten Textobjekte (831 - 834) im zweiten Speicher (813) zuzugreifen, um die Mobiltelekommunikationsvorrichtung (800) im Energiesparmodus zu betreiben, wobei die Textverarbeitungsanwendung eine Parallel-Bitstrom-Textverarbeitungsanwendung aufweist;
- Empfangen einer Anfrage, die einen Suchbegriff beinhaltet;
- unter Verwendung der Parallel-Bitstrom-Textverarbeitungsanwendung Suchen nach dem Suchbegriff in den gespeicherten Textobjekten;
- Anzeigen von Teilen der Textobjekte, die den Suchbegriff beinhalten, in einer grafischen Benutzeroberfläche der Mobilkommunikationsvorrichtung zum Verhindern der Nutzung der Bildlauffunktion der grafischen Benutzeroberfläche.

2. Verfahren nach Anspruch 1, wobei der zweite Speicher als ein Archivspeicher zum Archivieren der zugeordneten Tabellen bereitgestellt wird.

3. Verfahren nach Anspruch 1, wobei der zweite Speicher ein energiesparender Speicher ist, wobei der Zugriff auf einen gegebenen Betrag von im zweiten Speicher gespeicherten Daten weniger Energie verbraucht als ein Zugriff auf den gleichen Betrag von im ersten Speicher gespeicherten Daten.

4. Verfahren nach Anspruch 3, wobei der erste Speicher einen HDD-Speicher umfasst, wobei der zweite Speicher einen SSD-Speicher umfasst.

5. Verfahren nach einem der vorhergehenden Ansprüche, wobei das vordefinierte Zeichencodierschema Datenkompression aufweist, wobei das Verfahren ferner aufweist:
- aus einer zweiten Telekommunikationsvorrichtung Empfangen einer Anfrage, die einen Suchbegriff beinhaltet, wobei die zweite Telekommunikationsvorrichtung über ein Netzwerk mit der Telekommunikationsvorrichtung verbunden ist;
- unter Verwendung der Parallel-Bitstrom-Textverarbeitungsanwendung Suchen nach dem Suchbegriff in den gespeicherten komprimierten Textobjekten;
- Senden der komprimierten Textobjekte, die den Suchbegriff beinhalten, an die zweite Telekommunikationsvorrichtung.

6. Verfahren nach Anspruch 5, wobei das Netzwerk ein Zugangsnetzwerk eines Telekommunikationssystems aufweist, wobei das Senden der komprimierten Textobjekte, die den Suchbegriff beinhalten, in einer oder mehr SMS oder in einer oder mehr E-Mails durchgeführt wird.

7. Verfahren nach einem der vorhergehenden Ansprüche, wobei ein Textobjekt der Textobjekte wenigstens eines der Folgenden aufweist:
- eine Textdatei;
- eine XML-Datei;
- eine SMS;
- eine E-Mail.

8. Verfahren nach einem der vorhergehenden Ansprüche, wobei das vordefinierte Zeichencodierschema Datenverschlüsselung und/oder ein Textmuster aufweist.

9. Verfahren nach einem der vorhergehenden Ansprüche, wobei die Mobiltelefonvorrichtung eine batteriebetriebene Vorrichtung ist.

10. Verfahren nach einem der vorhergehenden Ansprüche, das ferner Folgendes aufweist: Generieren eines Suchindexes der Textobjekte auf Basis von Begriffen im Textobjekt, wobei die Textsuche in den Textobjekten den Suchindex zum Suchen nach Betriffen in den Textobjekten verwendet.

11. Computerprogrammprodukt, computerausführbare Anweisungen aufweisend, das bei Ausführung in einem Computer die Verfahrensschritte des Verfahrens nach einem der vorhergehenden Ansprüche durchführt.

12. Mobiltelekommunikationsvorrichtung, umfassend eine relationale Mobil-Datenbank, wobei die relationale Mobil-Datenbank zugeordnete Tabellen aufweist, wobei die relationale Mobil-Datenbank in einem ersten Speicher der Mobiltelekommuniksationsvorrichtung gespeichert wird, wobei die Mobiltelekommunikationsvorrichtung ferner einen zweiten Speicher aufweist; und wenigstens eine Textverarbeitungsanwendung zum Zugreifen auf Texte, die in einem vordefinierten Zeichencodierschema codiert sind; wobei die Mobiltelekommunikationsvorrichtung konfiguriert ist zum:
- Auswählen von einer oder mehr Datensatzmengen aus den zugeordneten Tabellen, wobei Datensätze einer Datensatzmenge mit einem Datenbankschlüssel verbunden sind;
- für jede ausgewählte Datensatzmenge Kombinieren der Datensätze der Menge in einem Textobjekt durch:
∘ Codieren der Einträge der genannten Datensätze in einem verknüpften alphanumerischen Format unter Verwendung des vordefinierten Zeichencodierschemas; und
∘ Markieren des Textobjekts unter Verwendung des Datenbankschlüssels;
- Speichern der Textobjekte im zweiten Speicher und Löschen der einen oder der mehr Datensatzmengen aus den zugeordneten Tabellen und
- Konfigurieren der Parallel-Bitstrom-Textverarbeitungsanwendung, um auf die gespeicherten Textobjekte im zweiten Speicher zuzugreifen, um die Mobiltelekommunikationsvorrichtung im Energiesparmodus zu betreiben, wobei die Textverarbeitungsanwendung eine Parallel-Bitstrom-Textverarbeitungsanwendung aufweist;
- Empfangen einer Anfrage, die einen Suchbegriff beinhaltet;
- unter Verwendung der Parallel-Bitstrom-Textverarbeitungsanwendung Suchen nach dem Suchbegriff in den gespeicherten komprimierten Textobjekten;
- Anzeigen von Teilen der Textobjekte, die den Suchbegriff beinhalten, in einer grafischen Benutzeroberfläche der Mobilkommunikationsvorrichtung zum Verhindern der Nutzung der Bildlauffunktion der grafischen Benutzeroberfläche.

## Revendications

1. Procédé de fonctionnement d'un dispositif de télécommunications mobile (800) dans un mode d'économie d'énergie, le dispositif de télécommunications mobile comprenant une base de données relationnelle mobile, la base de données relationnelle mobile (817) comprenant des tableaux correspondants (819), la base de données relationnelle mobile (817) étant stockée dans un premier système de stockage (811) du dispositif de télécommunications mobile (800), le dispositif de télécommunications mobile fonctionnant dans un mode de consommation d'énergie par défaut, le procédé comprenant :
- la mise en place d'un second système de stockage (813) dans le dispositif de télécommunications mobile ;
- la fourniture d'une application de traitement de texte (815) pour accéder à des textes encodés dans un schéma d'encodage de caractères prédéfini ;
- le choix, à partir des tableaux correspondants (819), d'un ou de plusieurs ensembles d'enregistrements, où les enregistrements d'un ensemble d'enregistrements sont reliés à une clé de base de données ;
- pour chaque ensemble d'enregistrements choisi, la combinaison de l'ensemble d'enregistrements dans un objet de texte (831 à 834) par :
∘ l'encodage des entrées desdits enregistrements dans un format alphanumérique concaténé en utilisant le schéma d'encodage de caractères prédéfini ; et
∘ le marquage de l'objet de texte (831 à 834) en utilisant la clé de base de données ;
- le stockage des objets de texte (831 à 834) dans le second système de stockage (813) et l'effacement du ou des ensembles d'enregistrements à partir des tableaux correspondants (819) ; et
- la configuration, par une unité de commande (839) du dispositif de télécommunications mobile (800), de l'application de traitement de texte (815) pour accéder aux objets de texte (831 à 834) stockés dans le second système de stockage (813) afin de faire fonctionner le dispositif de télécommunications mobile (800) dans le mode d'économie d'énergie, où l'application de traitement de texte comprend une application de traitement de texte à train de bits parallèles ;
- la réception d'une requête incluant un terme de recherche ;
- la recherche, en utilisant l'application de traitement de texte à train de bits parallèles, d'un terme de recherche dans les objets de texte stockés ;
- l'affichage de parties des objets de texte qui comprennent un terme de recherche dans une interface d'utilisateur graphique du dispositif de télécommunication mobile pour empêcher l'usage de la fonction de déroulement de l'interface graphique d'utilisateur.

2. Procédé selon la revendication 1, dans lequel le second système de stockage est fourni sous forme d'un système de stockage d'archives pour archiver les tableaux correspondants.

3. Procédé selon la revendication 1, dans lequel le second système de stockage est un stockage efficace d'énergie, où l'accès à une quantité donnée de données stockée dans le second système de stockage consomme moins d'énergie qu'un accès à la même quantité de données stockée dans le premier système de stockage.

4. Procédé selon la revendication 3, dans lequel le premier système de stockage comprend un stockage sur disque dur HDD, dans lequel le second stockage comprend un stockage sur disque électronique SSD.

5. Procédé selon l'une quelconque des revendications précédentes, dans lequel le schéma d'encodage de caractères prédéfini comprend une compression de données, le procédé comprenant en outre
- la réception, à partir d'un second dispositif de télécommunication, d'une requête incluant un terme de recherche, le second dispositif de télécommunication étant connecté au dispositif de télécommunication par le biais d'un réseau ;
- la recherche, en utilisant l'application de traitement de texte à train de bits parallèles, du terme de recherche dans les objets de texte compressés stockés ;
- l'envoi des objets de texte compressés qui comprennent le terme de recherche au second dispositif de télécommunication.

6. Procédé selon la revendication 5, dans lequel le réseau comprend un réseau d'accès d'un système de télécommunication, où l'envoi des objets de texte compressés qui comprennent le terme de recherche est effectué en un ou plusieurs SMS ou en ou plusieurs Emails.

7. Procédé selon l'une quelconque des revendications précédentes, dans lequel un objet de texte parmi les objets de texte comprend au moins un élément parmi :
- un fichier de texte ;
- un fichier de métalangage XML ;
- un message SMS ;
- un Email.

8. Procédé selon l'une quelconque des revendications précédentes, dans lequel le schéma d'encodage de caractères prédéfini comprend un cryptage de données et/ou un modèle de texte.

9. Procédé selon l'une quelconque des revendications précédentes, dans lequel le dispositif de télécommunication mobile est un dispositif alimenté par batterie.

10. Procédé selon l'une quelconque des revendications précédentes, comprenant en outre : la génération d'un index de recherche des objets de texte sur la base de termes dans les objets de texte, où la recherche de texte dans les objets de texte utilise l'index de recherche pour rechercher des termes dans les objets de texte.

11. Produit-programme informatique comprenant des instructions exécutables qui, lorsqu'elles sont exécutées sur un ordinateur, effectuent les étapes de procédé du procédé selon l'une quelconque des revendications précédentes.

12. Dispositif de télécommunication mobile comprenant une base de données relationnelle mobile, la base de données relationnelle mobile comprenant des tableaux correspondants, la base de données relationnelle mobile étant stockée dans un premier système de stockage du dispositif de télécommunications mobile, le dispositif de télécommunication mobile comprenant en outre un second système de stockage et une application de traitement de texte pour accéder à des textes encodés dans un schéma d'encodage de caractères prédéfini, le dispositif de télécommunication mobile étant configuré pour :
- le choix, à partir des tableaux correspondants, d'un ou de plusieurs ensembles d'enregistrements, où les enregistrements d'un ensemble d'enregistrements sont reliés à une clé de base de données ;
- pour chaque ensemble d'enregistrements choisi, la combinaison des enregistrements de l'ensemble dans un objet de texte par :
∘ l'encodage des entrées desdits enregistrements dans un format alphanumérique concaténé en utilisant le schéma d'encodage de caractères prédéfini ; et
∘ le marquage de l'objet de texte en utilisant la clé de base de données ;
- le stockage des objets de texte dans le second système de stockage et l'effacement du ou des ensembles d'enregistrements à partir des tableaux correspondants ; et
- la configuration de l'application de traitement de texte à train de bits parallèles pour accéder aux objets de texte stockés dans le second système de stockage pour faire fonctionner le dispositif de télécommunications mobile dans le mode d'économie d'énergie, où l'application de traitement de texte comprend une application de traitement de texte à train de bits parallèles ;
- la réception d'une requête incluant un terme de recherche ;
- la recherche, en utilisant l'application de traitement de texte à train de bits parallèles, d'un terme de recherche dans les objets de texte stockés ;
- l'affichage de parties des objets de texte qui comprennent le terme de recherche dans une interface d'utilisateur graphique du dispositif de télécommunication mobile pour empêcher l'usage de la fonction de déroulement de l'interface graphique d'utilisateur.
